# EUROPÄISCHE PATENTSCHRIFT

(11) **EP 1 740 418 B1**
(45) Veröffentlichungstag und Bekanntmachung des Hinweises auf die Patenterteilung: **13.06.2012**
(21) Anmeldenummer: 04730263.3
(22) Anmeldetag: 29.04.2004
(51) Int. Cl.: B60R 25/00, B60R 25/04, H04L 9/32, G07C 9/00

(54) **AUTHENTISIERUNG EINER FAHRZEUGEXTERNEN VORRICHTUNG**
AUTHENTICATION OF A VEHICLE-EXTERNAL DEVICE
AUTHENTIFICATION D'UN DISPOSITIF DE VEHICULE EXTERNE

(43) Veröffentlichungstag der Anmeldung: 10.01.2007
(73) Patentinhaber: Bayerische Motoren Werke Aktiengesellschaft, 80809 München (DE)
(72) Erfinder: KUHLS, Burkhard, 86391 Stadtbergen (DE); KIESSLING, Horst, 85354 Freising (DE)
(86) Internationale Anmeldenummer: PCT/EP2004/004665
(87) Internationale Veröffentlichungsnummer: WO 2005/115809

(56) Entgegenhaltungen:
- WO-A-97/39553
- US-A- 5 708 712
- US-A1- 2002 194 476
- US-B2- 6 587 030

## Beschreibung

Die Erfindung betrifft insbesondere ein Verfahren zur Authentisierung einer fahrzeugexternen Vorrichtung bei einem Bussystem eines Kraftfahrzeugs, das Steuergeräte aufweist, nach dem Oberbegriff des Anspruchs 1. Das Dokument US 5708712A offenbart die Merkmale des oberbegriffs des Anspruchs 1.

Zur Verhinderung von Manipulationen an der in den Steuergeräten gespeicherten Ablaufsteuerung bzw. der entsprechenden Software, die von einem oder mehreren in den Steuergeräten vorgesehenen Prozessoren ausgeführt wird, ist es wichtig, die Berechtigung des Zugriffs auf die Steuergeräte zu überwachen. Die Berechtigung kann durch kryptografische Maßnahmen überprüft werden.

Nachteilig ist, dass die Durchführung entsprechender kryptografischer Maßnahmen den oder die Prozessoren des Steuergeräts und weitere Hardware-Komponenten des Steuergeräts belastet bzw. leistungsfähigere und damit teurere Steuergeräte bedingt. Dies schlägt insbesondere bei einem millionenfach eingesetzten Produkt, wie bei dem Steuergerät eines Kraftfahrzeugs, zu Buche.

Aufgabe der vorliegenden Erfindung ist es insbesondere, ein Verfahren anzugeben, das eine Manipulation einer in einem Steuergerät gespeicherten Ablaufsteuerung bei geringen Kosten wirksam verhindert.

Diese Aufgabe wird durch die im Anspruch 1 angegebenen Maßnahmen verfahrensmäßig und durch den unabhängigen System-Anspruch vorrichtungsmäßig gelöst. Vorteilhafte Ausgestaltungen der Erfindung sind Gegenstand der abhängigen Patentansprüche.

Ein wesentlicher Aspekt des erfindungsgemäßen Verfahrens zur Authentisierung einer fahrzeugexternen Vorrichtung bei einem Bussystem eines Kraftfahrzeugs, das Steuergeräte aufweist, besteht in der Durchführung der folgenden Maßnahmen. In einem ersten Schritt übermittelt eine in dem Bussystem vorgesehene Authentisierungsvorrichtung eine Authentisierungsanfrage an die fahrzeugexterne Vorrichtung.

Die fahrzeugexterne Vorrichtung signiert die Authentisierungsanfrage mit einem geheimen Schlüssel eines asymmetrischen Schlüssel-Paars, insbesondere ein Public-Key-Schlüssel-Paar, und übermittelt die signierte Authentisierungsanfrage oder lediglich die Signatur an die Authentisierungsvorrichtung.

Bei der Authentisierungsanfrage handelt es sich bevorzugt um eine von der Authentisierungsvorrichtung generierte Zufallszahl oder dgl., die insbesondere lediglich einmalig erzeugt wird. Bei der Authentisierungsvorrichtung handelt es sich bevorzugt um ein zentrales Steuergerät, das Zugriff auf den öffentlichen Schlüssel des Public-Key-Schlüssel-Paars hat, und ein Public-Key-Verfahren ausführen kann.

Die Authentisierungsvorrichtung ermittelt unter Verwendung desselben Algorithmus wie die fahrzeugexterne Vorrichtung eine Signatur der Authentisierungsanfrage, entschlüsselt die von der fahrzeugexternen Vorrichtung übermittelte Signatur unter Verwendung des zum geheimen Schlüssel komplementären öffentlichen Schlüssels und vergleicht die ermittelte mit der übermittelten Signatur.

Bei einer Ausgestaltung der Erfindung ist vorgesehen, dass bei positivem Vergleich bzw. bei Übereinstimmung der Signaturen die fahrzeugexterne Vorrichtung durch die Authentisierungsvorrichtung Schreib- und/oder Lese-Zugriff auf einen Speicher mindestens eines der Steuergeräte erhält.

Bei einer bevorzugten Ausführungsform der Erfindung, wird der fahrzeugexternen Vorrichtung ermöglicht, den Speicher eines oder mehrerer Steuergeräte mit einer neuen Ablaufsteuerung bzw. Software und/oder mit einem Freischaltcode zu versehen. Bei der neuen Ablaufsteuerung kann es sich insbesondere um eine Ablaufsteuerung handeln, die ggü. der früheren Ablaufsteuerung aktualisiert worden ist, die Software-Probleme beseitigt, und/oder zusätzliche Funktionen des Steuergeräts bereitstellt. Bei der neuen Ablaufsteuerung kann es sich um eine Ergänzung zur bereits im Steuergerät gespeicherten Ablaufsteuerung handeln, die insbesondere zusätzliche Funktionen des Steuergeräts bereitstellt.

Bei dem Freischaltcode kann es sich insbesondere um Daten handeln, der eine in dem Steuergerät oder an anderer Stelle im Fahrzeug ablaufbereit gehaltene Ablaufsteuerung bzw. Software, insbesondere zeitlich befristet, freischaltet. D. h. die bereits im Fahrzeug gespeicherte Ablaufsteuerung bzw. Software kann erst nach der Bereitstellung des Freischaltcodes im Fahrzeug ausgeführt werden.

Bei einer alternativen oder ergänzenden Ausführungsform der Erfindung sind zur Authentisierung von Steuergeräten bzw. zur Prüfung, ob es sich um berechtigte Steuergeräte im Bussystem handelt, die folgenden Maßnahmen vorgesehen. In einem ersten Schritt übermittelt ein erstes Steuergerät einer Vielzahl von Steuergeräten des Kraftfahrzeugs über das Bussystem eine Authentisierungsanfrage an die Authentisierungsvorrichtung.

Bei der Authentisierungsanfrage handelt es sich bevorzugt um eine von dem Steuergerät generierte Zufallszahl oder dgl., die lediglich einmalig erzeugt wird. Die Authentisierungsvorrichtung ist dergestalt, dass sie Zugriff auf einen symmetrischen, kryptografischen Schlüssel hat und ein symmetrisches kryptografisches Verfahren ausführen kann.

Die Ausführung eines symmetrischen kryptografischen Verfahrens beansprucht die Ressourcen, insbesondere den Prozessor, des Steuergeräts bzw. der Authentisierungsvorrichtung deutlich weniger als ein asymmetrisches Verfahren, so dass die Authentisierung der Steuergeräte in einem Fahrzeug ggü. der Authentisierungsvorrichtung bei Verwendung der Erfindung deutlich kostengünstiger realisiert werden kann.

Die Authentisierungsvorrichtung signiert die Authentisierungsanfrage unter Verwendung eines ersten symmetrischen Schlüssels und übermittelt die signierte Authentisierungsanfrage oder lediglich die Signatur an das erste Steuergerät. Das Signieren bzw. die Erzeugung der Signatur geschieht, indem ein Hash-Algorithmus auf die Authentisierungsanfrage bzw. Authentisierungsdaten angewandt wird. Der Hash-Algorithmus liefert einen Hash-Wert, der charakteristisch für die konkreten Authentisierungsdaten ist. Der Hash-Wert wird mit dem ersten symmetrischen Schlüssel verschlüsselt und der verschlüsselte Hash-Wert an die Authentisierungsanfrage bzw. an die Authentisierungsdaten angefügt und zusammen mit der Authentisierungsanfrage an das erste Steuergerät übermittelt. Alternativ kann auch lediglich die Signatur bzw. der verschlüsselte Hash-Wert an das erste Steuergerät übermittelt werden, weil dort ja die Authentisierungsanfrage erzeugt worden und damit bereits vorhanden ist.

Das erste Steuergerät vergleicht die übermittelte Signatur mit einer vom ersten Steuergerät unter Anwendung des symmetrischen Schlüssels auf die Authentisierungsanfrage ermittelten Signatur. Die Signatur kann vom ersten Steuergerät ermittelt werden, indem derselbe Hash-Algorithmus, der von der Authentisierungsvorrichtung auf die Authentisierungsanfrage zur Ermittlung der Signatur angewandt worden ist, auch von dem ersten Steuergerät auf die Authentisierungsanfrage angewandt wird. Wiederum ergibt sich ein Hash-Wert. Dieser Hash-Wert oder die auf der Basis des Hash-Werts unter Verwendung des symmetrischen Schlüssels gebildete Signatur wird mit der übermittelten Signatur oder dem aus der übermittelten Signatur wiederum unter Verwendung des symmetrischen Schlüssels erhaltenen Hash-Werts verglichen.

Bei positivem Vergleich bzw. bei einer Übereinstimmung der Signaturen oder Hash-Werte gelten das erste Steuergerät und die Authentisierungsvorrichtung als wechselseitig authentisiert, d. h. für das Steuergerät gilt die Authentisierungsvorrichtung als echt bzw. berechtigt und umgekehrt. Entsprechend wird das erste Steuergerät bei positivem Vergleich bzw. Übereinstimmung vorzugsweise betriebsbereit gemacht. Alternativ oder ergänzend könnte der Authentisierungsvorrichtung ein Schreib- und/oder Lesezugriff auf einen elektronischen Speicher des ersten Steuergeräts eingeräumt werden.

Bei einem bevorzugten Ausführungsbeispiel der Erfindung ist vorgesehen, dass ein oder mehrere weitere Steuergeräte des Bussystems in der beschriebenen Weise eine Authentisierung mit der Authentisierungsvorrichtung durchführen. Durch diese Maßnahmen kann also überprüft werden, ob sich unberechtigte Steuergeräte oder eine unberechtigte Authentisierungsvorrichtung im Bussystem befinden.

Bei einem weiteren Ausführungsbeispiel der Erfindung wird die Authentisierung der Steuergeräte ggü. der Authentisierungsvorrichtung der Reihe nach durchgeführt. Dies verringert die erforderlichen Hardware-Ressourcen.

Bei einem Ausführungsbeispiel der Erfindung ist vorgesehen, dass das Kraftfahrzeug erst dann in Betrieb genommen werden kann, wenn weitgehend sämtliche Steuergeräte des Bussystems das Verfahren zur Authentisierung mit positivem Vergleichsergebnis durchgeführt haben. Hierdurch kann die Betriebssicherheit des Bussystems bzw. die Kompatibilität der Busteilnehmer gewährleistet werden. Ebenso erhöht diese Maßnahme den Diebstahlschutz des mit dem Bussystem der Erfindung ausgestatteten Kraftfahrzeugs, wenn eine Wegfahrsperre in dem Bussystem bzw. in den Steuergeräten integriert ist.

Bei einem anderen Ausführungsbeispiel der Erfindung ist vorgesehen, dass die Durchführung des Authentisierungsverfahrens jeweils vor dem Anlassen des Fahrzeugs vorgenommen wird, vorzugsweise nach dem Öffnen des Fahrzeugs. Durch diese Maßnahme wird die Betriebssicherheit, Kompatibilität etc. nicht nur einmalig, sondern periodisch überprüft.

Bei einem Ausführungsbeispiel der Erfindung wird vor dem Anlassen des Fahrzeugs das erfindungsgemäße Authentisierungsverfahren weitgehend lediglich für diejenigen Steuergeräte durchgeführt, die beim Anlassen des Fahrzeugs zur Verfügung stehen müssen, um das Fahrzeug bei kurzer Vorlaufzeit - falls erforderlich - betriebsbereit zu haben. Das erfindungsgemäße Authentisierungsverfahren kann dann für die anderen Steuergeräte nach dem Startvorgang des Fahrzeugs, ohne Behinderung der Inbetriebnahme des Kraftfahrzeugs, durchgeführt werden.

Bei einem weiteren Ausführungsbeispiel der Erfindung ist vorgesehen, dass weitgehend sämtliche Steuergeräte denselben symmetrischen Schlüssel bei der Durchführung des Authentisierungsverfahrens verwenden. Diese Maßnahme macht die Schlüsselverwaltung einfacher und hat zudem den Vorteil, dass die Steuergeräte des betreffenden Fahrzeugs hierdurch einander zugeordnet sind.

Bei einem Ausführungsbeispiel der Erfindung ist vorgesehen, dass der symmetrische Schlüssel von Fahrzeug zu Fahrzeug variiert und ein Steuergerät eines ersten Fahrzeugs bei der Durchführung des erfindungsgemäßen Authentisierungsverfahrens auf einen ersten symmetrischen Schlüssel und das gleiche Steuergerät eines zweiten Fahrzeugs bei der Durchführung des Verfahrens auf einen zweiten symmetrischen Schlüssel zugreift bzw. einen solchen verwendet.

Der symmetrische Schlüssel ist bevorzugt derart in dem Bussystem "untergebracht", dass er lediglich von der Authentisierungsvorrichtung und von den am Verfahren beteiligten Steuergeräten gelesen werden kann, d. h. geheim bleibt, und nicht unberechtigt verändert werden kann. Bei einer Ausgestaltung der Erfindung ist der symmetrische Schlüssel jeweils im nicht extern auslesbaren oder veränderbaren Boot-Bereich jeden Steuergeräts und im entsprechenden Bereich der Authentisierungsvorrichtung gespeichert.

Dadurch, dass der symmetrische Schlüssel von Fahrzeug zu Fahrzeug variiert, ist das Ausspähen des symmetrischen Schlüssels eines konkreten Fahrzeugs vergleichsweise unschädlich. Dies wäre beim Ausspähen eines symmetrischen Schlüssels aus einem Fahrzeug, der auf sämtliche Fahrzeuge desselben Typs "passt" selbstverständlich völlig anders.

Bei einem Ausführungsbeispiel der Erfindung ist vorgesehen, dass das erfindungsgemäße Verfahren in umgekehrter Richtung abläuft, d. h. dass die Authentisierungsvorrichtung eine Authentisierungsanfrage an das erste Steuergerät übermittelt, das erste Steuergerät die Authentisierungsanfrage mit dem ersten symmetrischen Schlüssel signiert und die signierte Authentisierungsanfrage an die Authentisierungsvorrichtung übermittelt.

Hierbei wird der Vergleich vom Steuergerät auf die Authentisierungsvorrichtung verlagert. Dies geht mit einer Ressourcen-Entlastung jeden Steuergeräts und einer Ressourcen-Belastung der Authentisierungsvorrichtung einher. Die vielfache Ressourcen-Entlastung ggü. einer einzigen Ressourcen-Belastung führt zur Einsparung von Hardware-Kosten.

Die Erfindung ermöglicht ein Bussystem eines Kraftfahrzeugs mit Steuergeräten, bei dem in dem Bussystem eine Authentisierungsvorrichtung vorgesehen ist und in dem Bussystem ein erfindungsgemäßes Verfahren ausgeführt wird. Ferner ermöglicht die Erfindung ein Computer-Programm-Produkt zur Authentisierung einer fahrzeugexternen Vorrichtung bei einem Bussystem eines Kraftfahrzeugs, das Steuergeräte aufweist, das ein Verfahren nach einem oder mehreren der vorstehenden Verfahrensansprüche ablaufen lässt.

## Patentansprüche

1. Verfahren zur Authentisierung einer fahrzeugexternen Vorrichtung bei einem Bussystem eines Kraftfahrzeugs, das Steuergeräte aufweist, wobei,
- in dem Bussystem eine Authentisierungsvorrichtung vorgesehen ist,
- die Authentisierungsvorrichtung eine Authentisierungsanfrage an die fahrzeugexterne Vorrichtung übermittelt,
- die fahrzeugexterne Vorrichtung die Authentisierungsanfrage mit einem geheimen Schlüssel eines asymmetrischen Schlüssel-Paars, insbesondere ein Public-Key-Schlüssel-Paar, signiert und die signierte Authentisierungsanfrage an die Authentisierungsvorrichtung übermittelt,
- die Authentisierungsvorrichtung unter Verwendung desselben Algorithmus wie die fahrzeugexterne Vorrichtung eine Signatur der Authentisierungsanfrage ermittelt, und **dadurch gekennzeichnet, dass**
- die von der fahrzeugexternen Vorrichtung übermittelte Signatur unter Verwendung des zum geheimen Schlüssel komplementären öffentlichen Schlüssels entschlüsselt und die ermittelte mit der übermittelten Signatur vergleicht.

2. Verfahren nach Anspruch 1, **dadurch gekennzeichnet, dass** bei positivem Vergleich bzw. bei Übereinstimmung die fahrzeugexterne Vorrichtung durch die Authentisierungsvorrichtung Schreib- und/oder Lese-Zugriff auf einen Speicher mindestens eines der Steuergeräte erhält.

3. Verfahren nach Anspruch 1 oder 2, **dadurch gekennzeichnet, dass**
- zur Authentisierung der Steuergeräte ein erstes Steuergerät über das Bussystem eine Authentisierungsanfrage an die Authentisierungsvorrichtung übermittelt,
- die Authentisierungsvorrichtung die Authentisierungsanfrage unter Verwendung eines ersten symmetrischen Schlüssels signiert und die signierte Authentisierungsanfrage oder lediglich die Signatur an das erste Steuergerät übermittelt,
- das erste Steuergerät die übermittelte Signatur der Authentisierungsanfrage mit einer vom ersten Steuergerät unter Anwendung des symmetrischen Schlüssels auf die Authentisierungsanfrage ermittelten Signatur vergleicht, und/oder
- das erste Steuergerät die übermittelte Signatur der Authentisierungsanfrage unter Verwendung des ersten symmetrischen Schlüssels entschlüsselt und ein erster Hash-Wert erhalten wird, und das erste Steuergerät einen Hash-Algorithmus auf die Authentisierungsanfrage anwendet, wodurch ein zweiter Hash-Wert erhalten wird, und
- das erste Steuergerät bei positivem Vergleich bzw. bei Übereinstimmung der Signaturen und/oder der Hash-Werte betriebsbereit gemacht wird.

4. Verfahren nach einem der vorstehenden Ansprüche, **dadurch gekennzeichnet, dass** ein oder mehrere weitere Steuergeräte des Bussystems das Verfahren zur Authentisierung nach Anspruch 3 durchführen.

5. Verfahren nach einem der vorstehenden Ansprüche, **dadurch gekennzeichnet, dass** das Kraftfahrzeug erst dann in Betrieb genommen werden kann, wenn weitgehend sämtliche Steuergeräte des Bussystems das Verfahren zur Authentisierung nach Anspruch 3 mit positivem Vergleichsergebnis durchgeführt haben.

6. Verfahren nach einem der vorstehenden Ansprüche, **dadurch gekennzeichnet, dass** die Durchführung des Authentisierungsverfahren jeweils vor dem Anlassen des Fahrzeugs vorgenommen wird, vorzugsweise nach dem Öffnen des Fahrzeugs.

7. Verfahren nach einem der vorstehenden Ansprüche, **dadurch gekennzeichnet, dass** weitgehend sämtliche Steuergeräte denselben symmetrischen Schlüssel bei der Durchführung des Authentisierungsverfahrens nach Anspruch 3 verwenden.

8. Verfahren nach einem der vorstehenden Ansprüche, **dadurch gekennzeichnet, dass** der symmetrische Schlüssel von Fahrzeug zu Fahrzeug variiert und ein Steuergerät eines ersten Fahrzeugs bei der Durchführung des Verfahrens nach Anspruch 3 einen ersten symmetrischen Schlüssel und das gleiche Steuergerät eines zweiten Fahrzeugs bei der Durchführung des Verfahrens nach Anspruch 3 einen zweiten symmetrischen Schlüssel verwendet.

9. Verfahren nach einem der vorstehenden Ansprüche, **dadurch gekennzeichnet, dass** das Verfahren nach Anspruch 3 in umgekehrter Richtung abläuft, d. h. dass die Authentisierungsvorrichtung eine Authentisierungsanfrage an das erste Steuergerät übermittelt, das erste Steuergerät die Authentisierungsanfrage mit dem ersten symmetrischen Schlüssel signiert und die signierte Authentisierungsanfrage oder lediglich die Signatur an die Authentisierungsvorrichtung übermittelt.

10. Verfahren nach einem der vorstehenden Ansprüche, **dadurch gekennzeichnet, dass** das Verfahren nach Anspruch 1 in umgekehrter Richtung abläuft, d. h. dass die fahrzeugexterne Vorrichtung die von der Authentisierungsvorrichtung vorgenommenen Maßnahmen und die Authentisierungsvorrichtung die von der fahrzeugexternen Vorrichtung vorgenommenen Maßnahmen ausführt.

11. Bussystem eines Kraftfahrzeugs mit Steuergeräten, **dadurch gekennzeichnet, dass** in dem Bussystem eine Authentisierungsvorrichtung vorgesehen ist und in dem Bussystem ein Verfahren nach einem der vorstehenden Verfahrensansprüche ausgeführt wird.

12. Computer-Programm-Produkt zur Authentisierung einer fahrzeugexternen Vorrichtung bei einem Bussystem eines Kraftfahrzeugs, das Steuergeräte aufweist, **dadurch gekennzeichnet, dass** das Computer-Programm-Produkt ein Verfahren nach einem oder mehreren der vorstehenden Verfahrensansprüche ablaufen lässt.

## Claims

1. A method for authenticating a vehicle-external device in a bus system of a motor vehicle, which has control units, wherein,
- an authentication device is provided in the bus system,
- the authentication device transmits an authentication request to the vehicle-external device,
- the vehicle-external device signs the authentication request with a secret key of an asymmetric pair of keys, more especially a pair of public keys, and transmits the signed authentication request to the authentication device,
- the authentication device determines a signature of the authentication device using the same algorithm as the vehicle-external device, and
**characterised in that**
- the authentication device decodes the signature transmitted by the vehicle-external device using the public key, which is complementary to the secret key, and compares the determined signature with the transmitted signature.

2. A method according to claim 1, **characterised in that** in the event of a positive comparison or agreement, the vehicle-external device obtains write and/or read access to a memory of at least one of the control units by means of the authentication device.

3. A method according to claim 1 or 2, **characterised in that**
- to authenticate the control units, a first control unit transmits an authentication request to the authentication device by means of the bus system,
- the authentication device signs the authentication request using a first symmetric key and transmits the signed authentication request or only the signature to the first control unit,
- the first control unit compares the transmitted signature of the authentication request with a signature determined by the first control unit by applying the symmetric key to the authentication request, and/or
- the first control unit decodes the transmitted signature of the authentication request using the first symmetric key and a first hash value is obtained, and the first control unit applies a hash algorithm to the authentication request, whereby a second hash value is obtained, and
- the first control unit is made operational upon a positive comparison or agreement of the signatures and/or the hash values.

4. A method according to any one of the preceding claims, **characterised in that** one or more further control units of the bus system carry out the method for authentication according to claim 3.

5. A method according to any one of the preceding claims, **characterised in that** the motor vehicle can only be started up when substantially all the control units of the bus system have carried out the method for authentication according to claim 3 with a positive comparison result.

6. A method according to any one of the preceding claims, **characterised in that** the authentication method is carried out in each case before the vehicle is started up, preferably after opening the vehicle.

7. A method according to any one of the preceding claims, **characterised in that** substantially all the control units use the same symmetric key when carrying out the authentication method according to claim 3.

8. A method according to any one of the preceding claims, **characterised in that** the symmetric key varies from vehicle to vehicle and a control unit of a first vehicle, when carrying out the method according to claim 3, uses a first symmetric key and the same control unit of a second vehicle, when carrying out the method according to claim 3, uses a second symmetric key.

9. A method according to any one of the preceding claims, **characterised in that** the method according to claim 3 proceeds in the reverse direction, that is **in that** the authentication device transmits an authentication request to the first control unit, the first control unit signs the authentication request with the first symmetric key and transmits the signed authentication request or only the signature to the authentication device.

10. A method according to any one of the preceding claims, **characterised in that** the method according to claim 1 proceeds in the reverse direction, that is **in that** the vehicle-external device carries out the measures carried out by the authentication device and the authentication device carries out the measures carried out by the vehicle-external device.

11. A bus system of a motor vehicle with control units, **characterised in that** an authentication device is provided in the bus system and a method according to any one of the preceding method claims is carried out in the bus system.

12. A computer program product for authenticating a vehicle-external device in a bus system of a motor vehicle, which has control units, **characterised in that** the computer program product allows a method according to any one or more of the preceding method claims to proceed.

## Revendications

1. Procédé d'authentification d'un dispositif externe à un véhicule pour un système de bus d'un véhicule automobile comportant des appareils de commande,
- un dispositif d'authentification étant prévu dans le système de bus,
- le dispositif d'authentification transmettant une requête d'authentification au dispositif externe au véhicule,
- le dispositif externe au véhicule signant la requête d'authentification avec une clé secrète d'une paire de clés asymétrique, notamment d'une paire de clés publiques et transmettant la requête d'authentification signée au dispositif d'authentification,
- le dispositif d'authentification utilisant le même algorithme que le dispositif externe au véhicule transmettant une signature de la requête d'authentification, et
dispositif **caractérisé en ce que**
la signature transmise par le dispositif externe au véhicule en utilisant la clé publique complémentaire à la clé secrète, est décodée et la signature transmise est comparée à la signature déterminée.

2. Procédé selon la revendication 1,
**caractérisé en ce qu'**
en cas de comparaison positive ou de concordance, le dispositif externe au véhicule reçoit par le dispositif d'authentification, un accès d'écriture et/ou de lecture à la mémoire d'au moins un appareil de commande.

3. Procédé selon la revendication 1 ou 2,
**caractérisé en ce que**
- pour authentifier l'appareil de commande, un premier appareil de commande transmet par le système de bus une requête d'authentification au dispositif d'authentification,
- le dispositif d'authentification transmet la requête d'authentification au premier appareil de commande en utilisant une première clé symétrique signée et la requête d'authentification ou uniquement la signature,
- le premier appareil de commande compare la signature transmise de la requête d'authentification à une signature transmise par le premier appareil de commande en utilisant la clé symétrique transmise en réponse à la requête d'authentification, et/ou
- le premier appareil de commande décode la signature transmise de la requête d'authentification en utilisant la première clé symétrique et reçoit une première somme de contrôle (hash) et le premier appareil de commande applique un algorithme de somme de contrôle (hash) à la requête d'authentification pour obtenir ainsi une seconde somme de contrôle (hash), et
- en cas de comparaison positive ou de concordance des signatures ou des valeurs de somme de contrôle (hash), l'appareil de commande est prêt à fonctionner.

4. Procédé selon l'une des revendications précédentes,
**caractérisé en ce qu'**
un ou plusieurs autres appareils de commande du système de bus effectue(nt) le procédé selon la revendication 3 pour authentifier.

5. Procédé selon l'une des revendications précédentes,
**caractérisé en ce que**
le véhicule ne peut être mis en service que si très largement tous les appareils de commande du système de bus ont exécuté le procédé d'authentification selon la revendication 3 ayant donné un résultat de comparaison positif.

6. Procédé selon l'une des revendications précédentes,
**caractérisé en ce qu'**
on effectue le procédé d'authentification chaque fois avant le démarrage du véhicule, de préférence après l'ouverture du véhicule.

7. Procédé selon l'une des revendications précédentes,
**caractérisé en ce que**
très largement tous les appareils de commande utilisent la même clé symétrique pour l'exécution du procédé d'authentification selon la revendication 3.

8. Procédé selon l'une des revendications précédentes,
**caractérisé en ce que**
la clé symétrique varie d'un véhicule à l'autre et un appareil de commande d'un premier véhicule pour l'application du procédé selon la revendication 3 utilise une première clé symétrique et le même appareil de commande d'un second véhicule pour la mise en oeuvre du procédé selon la revendication 3 utilise une seconde clé symétrique.

9. Procédé selon l'une des revendications précédentes,
**caractérisé en ce que**
le procédé de la revendication 3 s'exécute en sens inverse, c'est-à-dire que le dispositif d'authentification transmet une requête d'authentification au premier appareil de commande qui signe la requête d'authentification avec la première clé symétrique et transmet la requête d'authentification signée ou uniquement la signature au dispositif d'authentification.

10. Procédé selon l'une des revendications précédentes,
**caractérisé en ce qu'**
on exécute le procédé de la revendication 1 dans l'ordre inverse, c'est-à-dire que le dispositif externe au véhicule entreprend les mesures prescrites par le dispositif d'authentification et le dispositif d'authentification exécute les mesures assurées par le dispositif externe au véhicule.

11. Système de bus de véhicule automobile comportant des appareils de commande,
**caractérisé en ce que**
le système de bus comporte un dispositif d'authentification et le système de bus applique un procédé selon l'une des revendications précédentes.

12. Produit programme d'ordinateur pour authentifier un dispositif externe au véhicule pour un système de bus d'un véhicule avec un appareil de commande,
**caractérisé en ce que**
le produit programme d'ordinateur exécute une ou plusieurs des revendications de procédé ci-dessus.
